# EUROPÄISCHE PATENTSCHRIFT

(11) **EP 0 625 461 B1**
(45) Veröffentlichungstag und Bekanntmachung des Hinweises auf die Patenterteilung: **04.09.1996**
(21) Anmeldenummer: 93108253.1
(22) Anmeldetag: 21.05.1993
(51) Int. Cl.: B62B 9/26

(54) **Kinder- oder Puppenwagen mit einem zusammenklappbaren Scherengestell und einem Korb**
Pushchair with foldable shear like support and a basket
Voiture d'enfant ou de poupée comprenant un bati pliable en forme de cisaille et un panier

(43) Veröffentlichungstag der Anmeldung: 23.11.1994
(73) Patentinhaber: Hofmann, Christa, D-96224 Burgkunstadt (DE)
(72) Erfinder:
(74) Vertreter: LOUIS, PÖHLAU, LOHRENTZ & SEGETH

(56) Entgegenhaltungen:
- EP-A- 0 386 976
- DK-B- 144 121

## Beschreibung

Die Erfindung betrifft einen Kinder- oder Puppenwagen mit einem zusammenklappbaren Scherengestell, das zwei Scherenteile mit jeweils einem Paar seitlicher Schenkelelemente aufweist, wobei die beiden Scherenteile miteinander um eine gemeinsame Klappachse schwenkbeweglich verbunden und zur Lagerung von Rädern dienen, zwischen denen ein Korb vorgesehen ist.

Ein auf die Achsen eines Kinderwagens aufsetzbarer Korb ist beispielsweise aus der DE-OS 15 05 839 bekannt. Dort sind zwei den beiden Wagenachsen zugeordnete Halterung vorgesehen, welche die Achsen wenigstens teilweise umgreifen. Die eine Halterung umfasst einen in der Korbmitte quer zu den Wagenachsen verschiebbaren Stab, der ein abgebogenes Halteende aufweist, in einer am Korbende angebrachten Führung sitzt und durch Spannmittel verspannbar ist. Als Spannmittel kommt dort eine Schraubmutter zur Anwendung. Das bedeutet jedoch, daß der Bedienungskomfort Wünsche offen läßt.

Ein Gepäckkorb für Kinder- oder Sportwagen ist aus dem DE-GM 19 47 821 bekannt. Dieser bekannte Korb weist an seiner Bodenunterseite mindestens zwei mit ihrer Öffnung einander zugewandte Haken oder dgl. auf, deren einer gegen die Kraft einer Feder verschiebbar ist und deren gegenseitige Entfernung unter gleichzeitigem Spannen eines federnden Organs so vergrößerbar ist, daß sich die Haltehaken kraftschlüssig in die Räderachsen einhängen. In Abhängigkeit von der genannten Federkraft läßt auch bei diesem Gepäckkorb der Bedienungskomfort Wünsche offen.

Aus der DE-OS 26 36 403 ist ein Korb bzw. Gepäckbehälter für zusammenklappbare Kinderwagen mit einer vorderen und einer hinteren Radachse bekannt, wobei der Korb zur Anbringung zwischen den Rädern und über den Radachsen vorgesehen ist. Zu diesem Zweck weist der Boden dieses bekannten Behälters einen vorderen, schräg nach vorne und oben gerichteten Abschnitt auf, der sich bei in Fahrstellung befindlichem Kinderwagen über die vordere Radachse hinauserstreckt und als Trittbrett für den Wagen dient. Die Seitenteile dieses Korbes weisen über die vordere Radachse des Kinderwagens vorstehende Elemente auf, die mit dem vorderen Abschnitt des Bodens verbunden sind und für die Vorderräder des Kinderwagens eine Schutzeinrichtung bilden.

Die DE 40 24 145 C2 offenbart eine Vorrichtung zu Befestigen eines Korbes an einem Kinder- oder Puppen-Sitz/Liegewagen mit einem scherenartigen zusammenklappbaren Wagengestell, das zwei gegenüberliegende seitliche Gestellholmpaare bzw. Scherenteile aufweist, die jeweils zwei einander kreuzende, am Kreuzungspunkt miteinander drehbar verbundene Gestellholme bzw. Schenkelelemente aufweist, mit einem Sitz- oder Liegeaufsatz, der zwischen den Gestellholmpaaren im oberen Bereich des Wagengestells angeordnet ist, wobei die unteren Enden der paarweise gegenüberliegenden Gestellholme jeweils mittels eines vorderen bzw. hinteren Querholms miteinander verbunden sind, und/oder an denen Lagerhalter zur drehbaren Lagerung von vorderen bzw. hinteren Rädern befestigt sind, die bei aufgeklappten Wagengestell einen kürzeren Abstand zueinander aufweisen als in der zusammengeklappten Stellung des Wagengestells, wobei der Korb im Bereich der beiden Querhome angeordnet ist. Hierbei ist der relativ flach ausgebildete Korb mindestens an einem der beiden Querholme des Wagengestells mittels eines relativ zum Korb in Längsrichtung des Wagengestells stufenlos verschiebbaren Haltegestänges derartig angelenkt, daß sich der Korb sowohl bei aufgeklapptem als auch bei zusammengeklapptem Wagengestell zwischen den beiden Querholmen und bei zusammengeklapptem Wagengestell nicht oberhalb der beiden Querholme befindet.

Der Erfindung liegt die Aufgabe zugrunde, einen Kinder- oder Puppenwagen, bei dem es sich um einen Sitz- oder Liegewagen handelt, mit einem Korb derartig auszubilden, daß sich das Scherengestell des Wagens problemlos und kraftsparend zusammenklappen läßt, ohne daß sich der Korb störend bemerkbar macht.

Diese Aufgabe wird bei einem Kinder- oder Puppenwagen der eingangs genannten Art erfindungsgemäß dadurch gelöst, daß der Korb mittels Befestigungsorganen mit den Schenkelelementen der Scherenteile verbunden ist, wobei jedes Befestigungsorgan eine zur Klappachse des Scherengestells parallele Verbindungsachse aufweist, mittels welcher der Korb mit dem entsprechenden Befestigungsorgan verbunden ist, und mindestens die Befestigungsorgane eines der beiden Scherenteile entlang den beiden zugehörigen seitlichen Schenkelelementen linear verschiebbar angeordnet sind. Während bei den bekannten Wagen bzw. Körben der eingangs genannten Art der Korb jeweils an den Radachsen des Wagens festgelegt ist, ist der Korb erfindungsgemäß an den seitlichen Scherenteilen des zusammenklappbaren Scherengestells angeordnet, so daß der Korb ein vergleichsweise großes, d.h. breites Platzangebot vorfindet und mechanisch sehr stabil am zusammenklappbaren Scherengestell vorgesehen sein kann, wobei in Folge der erfindungsgemäß gegebenen Beweglichkeit des Korbes in bezug auf das zusammenklappbare Scherengestell das Zusammenklappen des Scherengestells einfach und kraftsparend möglich ist, so daß sich beim erfindungsgemäßen Kinder- oder Puppenwagen mit Korb ein guter Bedienungskomfort ergibt.

Eine Ausbildung des erfindungsgemäßen Wagens ist dadurch gekennzeichnet, daß die beiden zu einem Scherenteil zugehörigen Befestigungsorgane an den entsprechenden seitlichen Schenkelelementen dieses Scherenteils linear unbeweglich und daß die beiden zum zweiten Scherenteil zugehörigen Befestigungsorgane an den entsprechenden seitlichen Scherenelementen des besagten zweiten Scherenteils linear beweglich vorgesehen sind. Ein solcher Wagen ist relativ einfach ausgebildet, ohne daß hierdurch der Bedienungskomfort beeinträchtigt wird. Bei einem derartig ausgebildeten Wagen ändert sich jedoch die Winkelposition des Korbes in Bezug auf das Scherengestell, wenn dieses zwischen dem aufgeklappten und dem zusammengeklappten Zustand verschwenkt wird. Um eine solche Änderung der Winkelposition zwischen Korb und Scherengestell bei einem erfindungsgemäßen Wagen zu vermeiden, können die beiden zum einen Scherenteil zugehörigen Befestigungsorgane und die beiden zum zweiten Scherenteil zugehörigen Befestigungsorgane jeweils an den entsprechenden seitlichen Scherenelementen der beiden Scherenteile linear beweglich vorgesehen sein. Um bei einem Wagen der letztgenannten Art insbesondere im aufgeklappten normalen Betriebszustand eine genau definierte Positionierung des Korbes relativ zum aufgeklappten Scherengestell zu gewährleisten, ist es zweckmäßig, wenn jeweils mindestens ein seitliches Schenkelelement jedes der beiden Scherenteile mit einer die lineare Beweglichkeit der Befestigungsorgane begrenzenden Begrenzungseinrichtung ausgebildet ist. Bei diesen Begrenzungseinrichtungen kann es sich um Anschlagelemente handeln, die an den entsprechenden Scherenelementen vorgesehen sind, es ist jedoch auch möglich, die seitlichen Scherenelemente mit einer geeigneten Kröpfung auszubilden, welche dann eine entsprechende Begrenzungseinrichtung bilden.

Als zweckmäßig hat es sich erwiesen, wenn jedes Befestigungsorgan ein Hülsenelement aufweist, durch das sich das zugehörige Schenkelelement hindurcherstreckt, und wenn die zum Korb zugehörige Verbindungsachse an der Hülse schwenkbeweglich vorgesehen ist. Die Hülsenelemente können als Rohrhülsen beliebigen Querschnitts oder beispielsweise mit einem Längsspalt als federnde Hülsen ausgebildet sein.

Eine platzsparende Zusammenklappbarkeit des erfindungsgemäßen Wagens, ohne daß sich der Korb im zusammengeklappten Zustand des Scherengestells des Wagens störend bemerkbar macht, ergibt sich, wenn die Verbindungsachse des jeweiligen Befestigungsorgans gegen das zugehörige Scherenelement seitlich versetzt ist, weil sich dann im zusammengeklappten Zustand das entsprechende Befestigungsorgan und der Korb bzw. die Verbindungsachse, mittels welcher der Korb am Befestigungsorgan angeordnet ist, nicht gegenseitig behindern.

Weitere Einzelheiten, Merkmale und Vorteile ergeben sich aus der nachfolgenden Beschreibung von in der Zeichnung schematisch dargestellten Ausbildungen des erfindungsgemäßen Kinder- oder Puppenwagens mit zusammenklappbarem Scherengestell und einem Korb, wobei das Scherengestell jeweils nur abschnittweise gezeichnet ist und auf den Oberbau des entsprechenden Wagens verzichtet worden ist. Es zeigen:
- Fig 1: eine erste Ausführungsform des Wagens im aufgeklappten Zustand des Scherengestells in einer Seitenansicht,
- Fig. 2: den Wagen gemäß Fig. 1 in einer Übergangsstellung zwischen der aufgeklappten Stellung gemäß Fig. 1 und der platzsparend zusammengeklappten Ruhe- bzw. Lagerstellung des Wagens,
- Fig. 3: eine der Fig. 1 ähnliche Darstellung einer zweiten Ausführungsform des Kinder- oder Puppenwagens,
- Fig. 4: den Wagen gemäß Fig. 3 in einer Zwischenstellung zwischen der in Fig. 3 gezeichneten aufgeklappten Betriebsstellung und der platzsparend zusammengeklappten Ruhe- bzw. Lagerstellung des Wagens, und
- Fig. 5: ein Detail zur Verdeutlichung eines entlang eines Schenkelelementes linear verstellbeweglichen Befestigungsorgans, an dem ein abschnittweise angedeuteter Korb mittels einer Verbindungsachse schwenkbeweglich vorgesehen ist.

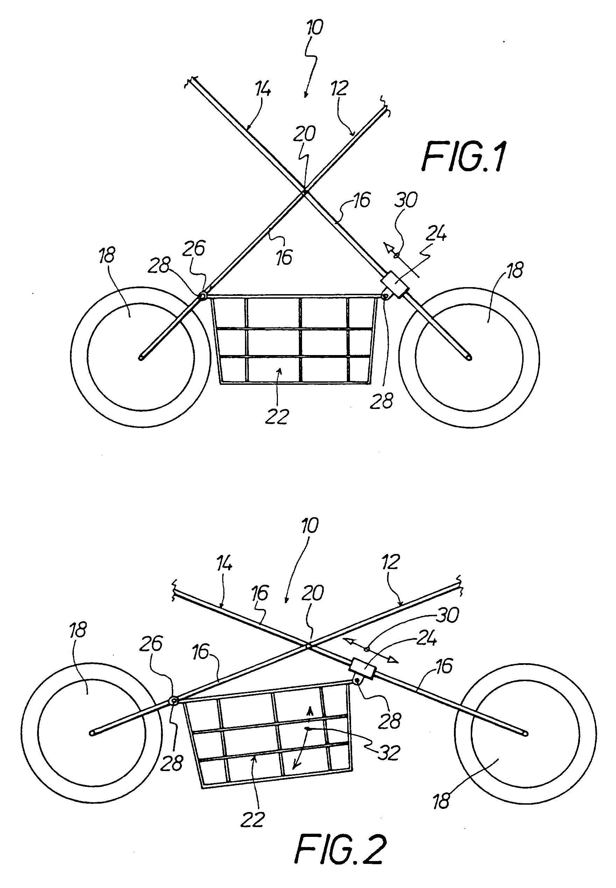

Fig. 1 zeigt schematisch den unteren Teil eines zusammenklappbaren Scherengestells 10 eines Kinder- oder Puppenwagens. Das Scherengestell 10 weist zwei Scherenteile 12 und 14 auf, wobei jedes der beiden Scherenteile 12 und 14 jeweils zwei seitliche Schenkelelemente 16 besitzt. In der Zeichnungsfigur ist jeweils nur eines der beiden hintereinanderliegenden Schenkelelemente 16 der Scherenteile 12 und 14 sichtbar. Die Scherenteile 12 und 14 sind zur Lagerung von Rädern 18 vorgesehen und miteinander um eine gemeinsame Klappachse 20 schwenkbeweglich verbunden, so daß das Scherengestell 10 zwischen der in Fig 1 gezeichneten aufgeklappten Stellung und einer zusammengeklappten platzsparenden Ruhe- bzw. Lagerposition verstellbar ist. In Fig. 2 ist eine Zwischenstellung des Scherengestells 10 zwischen der aufgeklappten und der platzsparend zusammengeklappten Betriebsstellung schematisch dargestellt.

Zwischen den Rädern 18 ist ein Korb 22 vorgesehen. Der Korb 22 ist mittels Befestigungsorganen 24 und 26 an den Schenkelelementen 16 der beiden Scherenteile 12 und 14 angeordnet. Jedes Befestigungsorgan 24 und 26 weist eine zur Klappachse 20 des Scherengestells 10 parallele Verbindungsachse 28 auf, mittels welcher der Korb 22 mit dem entsprechenden Befestigungsorganen 24 bzw. 26 schwenkbeweglich verbunden ist.

Bei der in den Figuren 1 und 2 gezeichneten Ausbildung des Scherengestells 10 sind nur die beiden Befestigungsorgane 24 entlang den beiden zugehörigen Schenkelelementen 16 des Scherenteils 14 linear beweglich vorgesehen, was in den Figuren 1 und 2 durch den Pfeil 30 angedeutet ist. Die beiden zu den Schenkelelementen 16 des Scherenteils 12 zugehörigen Befestigungsorgane 26 sind an den beiden seitlichen Schenkelelementen 16 des Scherenteils 12 linear unbeweglich vorgesehen, so daß sich beim Zusammenklappen des Scherengestells 10 um die Klappachse 20 eine Verschwenkung des Korbes 22 in Richtung des bogenförmigen Pfeiles 32 (sh. Fig. 2) um die miteinander axial fluchtenden Verbindungsachsen 28 der besagten ortsfest vorgesehenen Befestigungsorgane 26 ergibt.

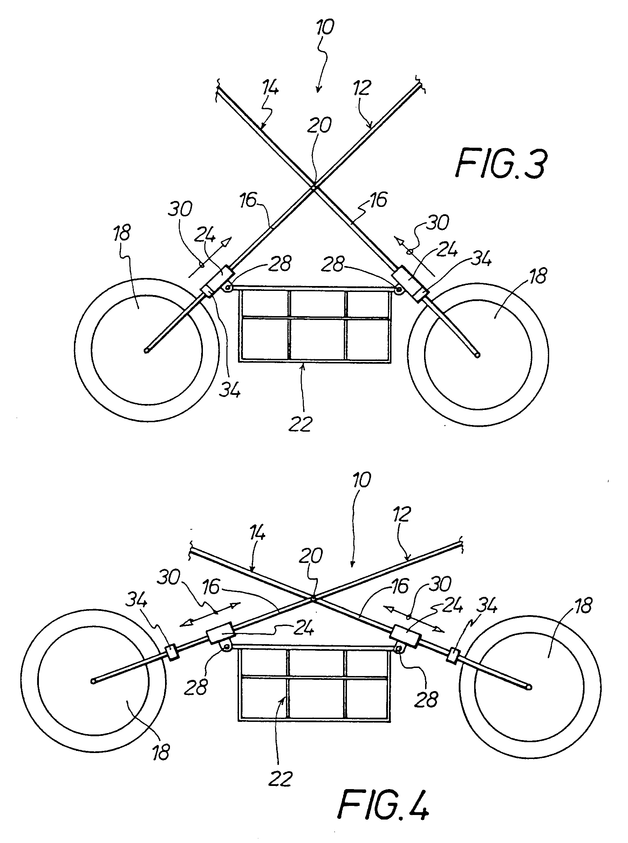

Die Figuren 3 und 4 zeigen eine Ausbildung des Scherengestells 10, die sich von der in den Figuren 1 und 2 schematisch gezeichneten Ausführungsform des Scherengestells 10 insbesondere dadurch unterscheidet, daß nicht nur das Scherenteil 14 sondern auch das Scherenteil 12 an den jeweiligen beiden Schenkelelementen 16 mit Befestigungsorganen 24 versehen ist, die in Bezug auf das zugehörige Schenkelelement 16 linear verschiebbar vorgesehen sind, was in den Figuren 3 und 4 durch die Pfeile 30 angedeutet ist.

Gleiche Einzelheiten sind in den Figuren 3 und 4 mit denselben Bezugsziffern bezeichnet wie in den Figuren 1 und 2, so daß es sich erübrigt, in Verbindung mit den Figuren 3 und 4 alle diese Einzelheiten noch einmal detailiert zu beschreiben.

Durch die Ausbildung des zusammenklappbaren Scherengestells 10 gemäß den Figuren 3 und 4 mit linear verschiebbaren Befestigungsorganen 24 ergibt sich bei jeder Klappbewegung des Scherengestells 10 eine Verschiebung der Befestigungsorgane 24 entlang sämtlichen Schenkelelementen 16, so daß der Korb 22 bei jeder Klappbewegung des Scherengestells 10 zwischen den Rädern 18 eine parallele Bewegung ausführt, d.h. eine winkelige Verschwenkung - wie in Fig. 2 angedeutet - unterbleibt.

Zur Begrenzung der linearen Verschiebebewegung der Befestigungsorgane 24 relativ zu den zugehörigen Schenkelelementen 16 sind diese mit Begrenzungseinrichtungen 34 versehen. Bei diesen Begrenzungseinrichtungen 34 kann es sich um Anschläge oder um Abkröpfungen der Schenkelelemente 16 handeln.

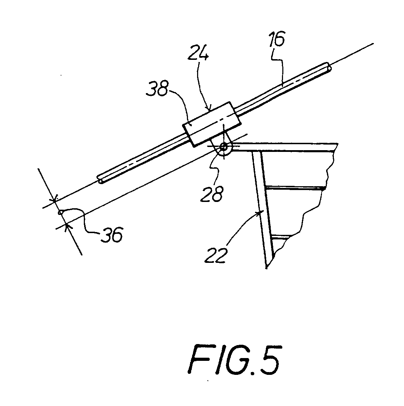

Um das Scherengestell 10 sehr platzsparend zusammenklappen zu können, ist es zweckmäßig, wenn - wie aus Fig. 5 ersichtlich ist - die Verbindungsachse 28, mittels welcher der abschnittweise angedeutete Korb 22 mit dem entsprechenden Befestigungsorgan 24 schwenkbeweglich verbunden ist, gegen das zugehörige Schenkelelement 16, das in Fig. 5 ebenfalls nur abschnittweise gezeichnet ist, seitlich versetzt ist, was durch den Pfeil 36 in Fig. 5 angedeutet ist. Aus dieser Zeichnungsfigur ist auch zu erkennen, daß das Befestigungsorgan 24 ein Hülsenelement 38 aufweist, durch das sich das zugehörige Scherenelement 16 hindurcherstreckt.

## Patentansprüche

1. Kinder- oder Puppenwagen mit einem zusammenklappbaren Scherengestell (10), das zwei Scherenteile (12, 14) mit jeweils einem Paar seitlicher Schenkelelemente (16) aufweist, wobei die beiden Scherenteile (12, 14) miteinander um eine gemeinsame Klappachse (20) schwenkbeweglich verbunden sind und zur Lagerung von Rädern (18) dienen, zwischen denen ein Korb (22) vorgesehen ist,
**dadurch gekennzeichet,**
daß der Korb (22) mittels Befestigungsorganen (24, 26) mit den Schenkelelementen (16) der Scherenteile (12,14) verbunden ist, wobei jedes Befestigungsorgan (24,26) eine zur Klappachse (20) des Scherengestells (10) parallele Verbindungsachse (28) aufweist, mittels welcher der Korb (22) mit dem entsprechenden Befestigungsorgan (24, 26) verbunden ist und mindestens die Befestigungsorgane (24) eines der beiden Scherenteile (12, 14) entlang den beiden zugehörigen seitlichen Schenkelelementen (16) linear verschiebbar angeordnet ist.

2. Wagen nach Anspruch 1,
**dadurch gekennzeichnet,**
daß die beiden zum einen Scherenteil (12) zugehörigen Befestigungsorgane (26) an den entsprechenden seitlichen Schenkelelementen (16) dieses Scherenteils (12) linear unbeweglich und daß die beiden zum zweiten Scherenteil (14) zugehörigen Befestigungsorgane (24) an den entsprechenden seitlichen Schenkelelementen (16) des besagten zweiten Scherenteils (14) linear beweglich vorgesehen sind.

3. Wagen nach Anspruch 1,
**dadurch gekennzeichnet,**
daß die beiden zum einen Scherenteil (12) zugehörigen Befestigungsorgane (24) und die beiden zum zweiten Scherenteil (14) zugehörigen Befestigungsorgane (24) jeweils an den entsprechenden seitlichen Schenkelelementen (16) der beiden Scherenteile (12,14) linear beweglich vorgesehen sind.

4. Wagen nach Anspruch 3,
**dadurch gekennzeichnet,**
daß jeweils mindestens ein seitliches Schenkelelement (16) jedes der beiden Scherenteile (12,14) mit einer die lineare Beweglichkeit der zugehörigen Befestigungsorgane (24) begrenzenden Begrenzungseinrichtung (34) ausgebildet ist.

5. Wagen nach einem der vorhergehenden Ansprüche,
**dadurch gekennzeichnet,**
daß jedes Befestigungsorgan (24, 26) ein Hülsenelement (38) aufweist, durch das sich das zugehörige Schenkelelement (16) hindurcherstreckt, und daß die zum Korb (22) zugehörige Verbindungsachse (28) an dem entsprechenden Hülsenelement (38) schwenkbeweglich vorgesehen ist.

6. Wagen nach einem der vorhergehenden Ansprüche,
**dadurch gekennzeichnet,**
daß die Verbindungsachse (28) des jeweiligen Befestigungsorgans (24,26) gegen das zugehörige Schenkelelement (16) versetzt ist.

## Claims

1. A child's or doll's pushchair with a foldable scissor-type frame (10) which has two scissor parts (12, 14) with one pair of lateral arm elements (16) each, in which arrangement, the two scissor parts (12, 14) are connected to each other for a pivoting movement round a common pivot pin (20) and serve for the mounting of wheels (18) between which a basket (22) is provided,
**characterized in that**
the basket (22) is connected to the arm elements (16) of the scissor parts (12, 14) by means of securing elements (24, 26), in which arrangement each securing element (24, 26) has a joint pin (28) parallel to the pivot pin (20) of the scissor-type frame (10), by means of which joint pin, the basket (22) is connected to the corresponding securing element (24, 26), and at least the securing elements (24) of one of the two scissor parts (12, 14) are arranged for linear displacement along the two associated lateral arm elements (16).

2. A pushchair according to claim 1,
**characterized in that**
the two securing elements (26) associated with one scissor part (12) are linearly immovable on the corresponding lateral arm elements (16) of this scissor part (12) and that the two securing elements (24) associated with the second scissor part (14) are designed to be linearly displaceable on the corresponding lateral arm elements (16) of the said second scissor part (14).

3. A pushchair according to claim 1,
**characterized in that**
the two securing elements (24, 26) associated with one scissor part (12) and the two securing elements (24) associated with the second scissor part (14) are designed to be linearly displaceable on the corresponding lateral arm elements (16) of the two scissor parts (12, 14).

4. A pushchair according to claim 3,
**characterized in that**
in each case, at least one lateral arm element (16) of each of the two scissor parts (12, 14) is designed with a limiting device (34) limiting the scope for linear displacement of the associated securing elements (24).

5. A pushchair according to one of the preceding claims,
**characterized in that**
each securing element (24, 26) has a sleeve element (38) through which there extends the associated arm element (16), and that the joint pin (28) associated with the basket (22) is designed for a pivoting movement on the corresponding sleeve element (38).

6. A pushchair according to one of the preceding claims,
**characterized in that**
the joint pin (28) of the respective securing element (24, 26) is offset against the associated arm element (16).

## Revendications

1. Voiture d'enfant ou de poupée avec un système en ciseaux (10) pliable présentant deux ciseaux (12, 14), chacun doté d'une paire de branches latérales (16), lesdits ciseaux (12, 14) étant reliés l'un à l'autre par une liaison pivotante au moyen d'un axe (20) de pliage commun, et permettant l'installation de roues (18) entre lesquelles est prévue une corbeille (22),
caractérisée en ce que la corbeille (22) est reliée aux branches (16) des ciseaux (12, 14) au moyen d'organes de fixation (24, 26) présentant chacun un axe de liaison (28) parallèle à l'axe de pliage (20) du système en ciseaux, au moyen desquels ladite corbeille (22) est reliée auxdits organes de fixation (24, 26), et en ce que au moins l'organe de fixation (24) est coulissable linéairement le long de l'un des deux ciseaux (12, 14) des deux branches latérales (16) correspondantes.

2. Voiture selon la revendication 1, caractérisée en ce que les deux organes de fixation (26) à un des ciseaux (12) des branches latérales (16) sont immobiles linéairement, alors que les deux éléments de fixation (24) au second ciseau (14) des branches latérales (16) correspondantes dudit second ciseau sont coulissables linéairement.

3. Voiture selon la revendication 1, caractérisée en ce que les deux organes de fixation (24) au premier ciseau (12) et les deux organes de fixation (24) au second ciseau (14) sont coulissables linéairement chacun par rapport aux branches latérales (16) correspondantes des deux ciseaux (12, 14).

4. Voiture selon la revendication 3, caractérisée en ce que des deux côtés au moins une des branches latérales (16) de chacun des deux ciseaux (12, 14) porte un dispositif de limitation limitant le mouvement linéaire de l'organe de fixation (24) correspondant.

5. Voiture selon l'une quelconque des revendications précédentes, caractérisée en ce que chaque organe de fixation (24, 26) comporte un manchon (38) à travers lequel la branche (16) passe, et en ce que l'axe de liaison (28) avec la corbeille (22) pivote au niveau du manchon (38) correspondant.

6. Voiture selon l'une quelconque des revendications précédentes, caractérisée en ce que l'axe de liaison (28) de chaque organe de liaison (24, 26) est placé contre la branche (16) correspondante.
